# EUROPÄISCHE PATENTSCHRIFT

(11) **EP 4 417 958 B1**
(45) Veröffentlichungstag und Bekanntmachung des Hinweises auf die Patenterteilung: **14.10.2026**
(21) Anmeldenummer: 24152341.4
(22) Anmeldetag: 17.01.2024
(51) Int. Cl.: G01M 13/025, F16D 3/50, G01M 15/02

(54) **MODULARES, LEISTUNGSVERZWEIGTES PRÜFSTANDGETRIEBE MIT KOPPLUNGSELEMENT**
MODULAR, POWER-SPLIT TEST STAND TRANSMISSION WITH COUPLING ELEMENT
BOÎTE DE VITESSES MODULAIRE À DIVISION DE PUISSANCE POUR BANC D'ESSAI AVEC ELEMENT DE COUPLAGE

(30) Priorität: 24.01.2023 DE 102023101709
(43) Veröffentlichungstag der Anmeldung: 21.08.2024
(73) Patentinhaber: Isar Getriebetechnik GmbH & Co. KG, 85737 Ismaning (DE)
(72) Erfinder: WIMMER, Albert, 85737 Ismaning (DE); PLETZER, Tobias, 80939 München (DE)
(74) Vertreter: Winter, Brandl - Partnerschaft mbB

(56) Entgegenhaltungen:
- WO-A1-2020/155557
- WO-A1-2021/026946
- DE-A1- 19 631 216
- US-A- 4 615 212

## Beschreibung

### Technisches Gebiet

Die vorliegende Offenbarung betrifft einen Prüfstand mit einem Prüfstandsgetriebe mit einer Drehmomenteingangswelle und einer Drehmomentausgangswelle, wobei die Drehmomentausgangswelle vorbereitet ist, um an einen Prüfling, wie einen E-Motor zu koppeln, und wobei zwischen der Drehmomenteingangswelle und der Drehmomentausgangswelle ein leistungsverzweigter Getriebeabschnitt vorhanden ist, der es ermöglicht auf unterschiedlichen, zueinander separaten, bspw. parallelen Kraftflusswegen Drehmoment von der Drehmomenteingangswelle zur Drehmomentausgangswelle zu verbringen.

### Stand der Technik

Aus dem Stand der Technik sind bereits Hybridantriebsstränge mit leistungsverzweigendem Getriebe für Elektromaschinen und entsprechende Schaltverfahren bekannt. Zum Beispiel offenbart die DE 10 2016 108 552 A1 einen Hybridantrieb, der ein leistungsverzweigendes, lastschaltbares Getriebe aufweist, das ein Stirnradwellengetriebe mit einer koaxialen Zentralwelle und ein antriebsmäßig dem schaltbaren Getriebe vorgeordnetes Leistungsverzweigungsgetriebe, wie ein Differenzialgetriebe in Planetengetriebebauweise, hat. Wenigstens zwei Antriebsmaschinen, wie ein Antriebsmotor und/oder als Generator nutzbare Elektromaschinen stehen jeweils drehbar und/oder rotationsfest mit der Welle der koaxialen Zentralwelle in Verbindung oder sind in Verbindung bringbar. Ein Klauenschaltelement mit mehreren Schaltstellungen ist als ein Kraftflussverbinder zwischen einem Rotationskörper des Leistungsverzweigungsgetriebes und einer der Wellen der Zentralwelle angeordnet. Die Getriebe sind durch Schaltabläufe mechanisch an- und abkoppelbar, wobei eine Klauenmuffe wenigstens zwei Schaltstellungen aufweist, zwischen denen im Betrieb des Hybridantriebs wechselweise geschaltet werden kann.

Weiterer Stand der Technik ist darüber hinaus aus DE 196 31 216 A1, WO 2020/155557 A1, US 4 615 212 A und WO 2021/026946 A1 bekannt.

Der Stand der Technik hat jedoch den Nachteil, dass es bisher wenig flexible/ anpassungsfähige Lösungen spezifisch für Hochleistungsprüfstände, wie z. B. zum Testen von E-Motoren oder gesamten Fahrzeug-E-Achsen gibt, d.h., dass die bisherigen Prüfstands-Lösungen variierende Kundenanforderungen, vor allem hinsichtlich verhältnismäßig großer Drehzahl-Betriebsbereiche, oftmals nicht mit einer Prüfstandsausführung abdecken können. Dies führt dazu, dass Kundenanforderungen für verschiedene Drehzahl-Betriebsbereiche von Prüflingen oftmals entweder an verschiedenen Prüfständen durchgeführt werden müssen oder die jeweiligen Prüfstände zeitaufwendig und damit kostenintensiv umgerüstet werden müssen.

Weiterhin hat der Stand der Technik den Nachteil, dass gerade Prüfstände für den Hochdrehzahlbereich in der Regel einen hohen Platzbedarf haben und dieser durch zusätzliche Kühlungsmaßnahmen, die durch die hohen Drehzahlen erforderlich werden, noch zusätzlich erhöht wird. Insbesondere bei sehr präzisen Prüfständen sind weiterhin Dämpfungsmaßnahmen notwendig, die zusätzlich zum Platzbedarf des Prüfstands beitragen können.

Es ist also Aufgabe der Erfindung, die Nachteile aus dem Stand der Technik zu vermeiden oder wenigstens zu mildern. Insbesondere soll dies durch ein modulares, leistungsverzweigtes und schaltbares Prüfstandsgetriebe erreicht werden.

Diese Aufgabe wird grundsätzlich bei einer gattungsgemäßen Vorrichtung erfindungsgemäß dadurch gelöst, dass zwischen einem leistungsverzweigten Getriebeabschnitt und einer Drehmomenteingangswelle und der Drehmomentausgangswelle mindestens ein Schaltelement vorhanden ist, wobei zumindest ein Schaltelemt ein Kopplungselement ist, das dazu eingerichtet ist die Drehmomenteingangswelle und die Drehmomentausgangswelle an den jeweils sich gegenüberliegenden Wellenende in axialer Richtung direkt zu koppeln und das eingerichtet ist, je nach Schaltstellung eine Drehmomentweitergabe zu ermöglichen oder zu verunmöglichen.

Dies hat den Vorteil, dass der Prüfstand durch die flexible Schaltung des zumindest einen Schaltelementes die Drehmomentweitergabe gezielt einstellen kann, um eine oder mehrere Über- oder Untersetzungen im Getriebe sowie einen Durchtrieb ohne Drehzahländerung, oder aber auch durch die Verunmöglichung der Drehmomentweitergabe einen Leerlauf, bewirken kann. Dadurch lässt sich mit einem Aufbau ein größerer Drehzahl-Betriebsbereich erreichen und es können beispielweise mit einem Aufbau verschiedene Prüflinge untersucht werden.

Zudem wird es dadurch möglich einen Durchtrieb ohne Drehzahländerung und mit möglichst wenig Reibungsverlusten im Getriebe zu ermöglichen, da die Kraftübertragung, ohne zusätzliche Verzweigungen, in axialer Richtung der Drehmomenteingangswelle und Drehmomentausgangswelle direkt über die Kopplung weitergegeben werden kann.

Vorteilhafte Ausführungsformen sind in den Unteransprüchen beansprucht und werden nachfolgend näher erläutert.

Zudem ist es zweckmäßig, wenn im Prüfstandsgetriebe die Drehmomenteingangswelle und/oder die Drehmomentausgangswelle mindestens ein Schaltelement aufweisen, das ein Durchschaltelement ist, das zwischen der Drehmomenteingangswelle und einem daran befindlichen Drehmomenteingangs-Ritzel oder zwischen der Drehmomentausgangswelle und einem daran befindlichen Drehmomentausgangs-Ritzel angeordnet ist und dazu eingerichtet ist, eine Drehmomentweitergabe zu ermöglichen oder zu verunmöglichen.

Hierdurch ist es möglich, dass auf einer angetriebenen Welle, wenn das Durchschaltelement für die Drehmomentweitergabe eingestellt ist, ein Drehmoment zwischen der angetriebenen Welle und dem Ritzel übertragen wird, indem das entsprechende Ritzel drehfest an der angetriebenen Welle fixiert ist, und wenn das Durchschaltelement dazu eingestellt ist, die Drehmomentweitergabe zu verunmöglichen, dreht sich die angetriebene Welle relativ zum entsprechenden Ritzel, ohne dass das Ritzel drehfest an der angetriebenen Welle fixiert ist und bewegt sich nicht.

Durchschaltelemente erlauben es somit, dass wenn sich mehrere Ritzel auf einer angetriebenen Welle befinden, selektiv ein Ritzel für die Drehmomentweitergabe zu fixieren, während an den restlichen auf der angetriebenen Welle befindlichen Ritzel die Drehmomentweitergabe verunmöglicht wird. Somit können einzelne Ritzel selektiv durchgeschaltet werden, womit unterschiedliche Über- oder Untersetzungen im Getriebe bauraumsparend realisiert werden können.

Ein vorteilhaftes Ausführungsbeispiel des Prüfstandsgetriebes ist dadurch gekennzeichnet, dass das Durchschaltelement und zumindest ein Bestandteil des Kopplungselements auf der Drehmomenteingangswelle angeordnet sind.

Durch ein solches Ausführungsbeispiel des Prüfstandsgetriebes wird es möglich, bei aktiviertem Durchschaltelement und entkoppeltem Kopplungselement, das heißt konkret das Durchschaltelement erlaubt die Drehmomentweitergabe und das Kopplungselement koppelt nicht direkt zwischen Drehmomenteingangswelle und Drehmomentausgangswelle, das Drehmoment über ein an der Drehmomenteingangswelle befindliches Ritzel in den leistungsverzweigten Getriebeabschnitt einzuleiten.

Weiterhin ist es mit dieser Konfiguration auch möglich, die Drehmomentweitergabe am Durchschaltelement und somit die Weiterleitung des Drehmoments in den leistungsverzweigten Getriebeabschnitt zu verunmöglichen und anstatt dessen das Drehmoment direkt über das gekoppelte Kopplungsmoment an die Drehmomentausgangswelle zu übertragen. Es kann somit zwischen einer wahlweise über- oder untersetzten oder unveränderten Drehzahlweitergabe geschaltet werden.

Ein weiteres vorteilhaftes Ausführungsbeispiel des Prüfstandsgetriebes ist dadurch gekennzeichnet, dass als Schaltelemente lediglich Durchschaltelemente an der Drehmomentausgangswelle angeordnet sind.

Durch diese vorteilhafte Ausführungsform kann eine Über- oder Untersetzung an der Drehmomentausgangswelle realisiert werden, je nachdem welches Schaltelement auf der Drehmomentausgangswelle aktiviert ist und somit die Drehmomentweitergabe über ein entsprechendes Ritzel vollzieht.

Ferner ist es vorteilhaft, wenn das Prüfstandsgetriebe eine zusätzliche Zufuhr für Flüssigkeiten / Fluide, wie z. B. Kühlmittel / Wärmemittel in der Drehmomentausgangswelle bspw. zur Kühlung des Prüflings hat, die entweder eine feststehende Leitung aufweist, die entlang der Mittelachse der hohlen Drehmomentausgangswelle verläuft und sich relativ zur Drehmomentausgangswelle nicht mitdreht, oder die eine Drehdurchführung aufweist, die eine statische Wellenhülse hat, in der sich ein Rotorteil der Drehdurchführung dreht, der am zur Drehmomenteingangswelle gewandten Ende der Drehmomentausgangswelle angeordnet ist und der an den von der Wellenhülse umgriffenen Umfangsabschnitten Einlassöffnungen für die Zusatzflüssigkeit aufweist und sich mit der hohlen Drehmomentausgangswelle mitdreht.

In beiden vorstehend genannten Ausführungsmöglichkeiten der Flüssigkeitszufuhr verläuft die Flüssigkeit vorteilhafterweise entlang der Mittelachse der Drehmomentausgangswelle, wodurch zum einen eine platzsparende Speisung des Prüfstandgetriebes ermöglicht wird, und zum anderen auch eine gleichzeitige, effiziente Speisung des an die Drehmomentausgangswelle gekoppelten Prüflings. Durch die Integration der Flüssikeitzufuhr ist es z. B. möglich, länger andauernde Tests im Hochdrehzahlbereich durch Flüssigkeitskühlung sicher zu gewährleisten.

Weiterhin ist es bevorzugt, wenn die Flüssigkeitszufuhr des Prüfstandsgetriebes über das Kopplungselement in die feststehende Leitung und die Drehmomentsausgangswelle gelangt.

Durch diese Ausführungsmöglichkeit ist es möglich, die Vorteile eines Kopplungselements und der Flüssigkeitszufuhr zu kombinieren und in einem Bauteil platzsparend und funktionsergänzend zu vereinen.

Gemäß einer vorteilhaften Weiterbildung des Prüfstandsgetriebes kann die Flüssigkeitszufuhr über die feststehende Leitung stattfinden, solange das Kopplungselement nicht die Drehmomenteingangswelle und die Drehmomentausgangwelle koppelt, und kann eine Unterbrechung der Flüssigkeitszufuhr stattfinden, sobald die Drehmomenteingangswelle und die Drehmomentausgangswelle direkt über das Kopplungselement gekoppelt werden.

Durch den vorstehend beschriebenen Wirkmechanismus der Flüssigkeitszufuhr ist es möglich, eine Flüssigkeitsspeisung automatisch zu unterbinden, wenn die Drehmomentausgangswelle mit der Drehmomenteingangswelle direkt gekoppelt ist und eine verhältnismäßig geringe Drehzahl aufweist und somit keine Flüssigkeitsspeisung erforderlich ist.

Gleichzeitig ist es möglich eine automatische Flüssigkeitsspeisung der Drehmomentausgangswelle, des Prüfstandsgetriebes selbst und des Prüflings zu gewährleisten, sobald sich die Drehzahl der Drehmomentausgangswelle verhältnismäßig gegenüber der Drehmomenteingangswelle erhöht, wenn diese nicht direkt mit der Drehmomenteingangswelle gekoppelt ist, sondern über eine Übersetzung des leistungsverzweigten Getriebeabschnitts relativ zur Drehmomenteingangswelle schneller gedreht wird.

Weiterhin ist es vorteilhaft, wenn das Prüfstandsgetriebe Torsionsdämpfungselemente, die an Verbindungsschnittstellen zwischen Drehmomenteingangswelle und einem Schaltelement und/oder an Verbindungsschnittstellen zwischen der Drehmomentausgangswelle und einem Schaltelement angeordnet sind, aufweist. Darüber hinaus können die Torsionsdämpfungselemente nicht nur zwischen einer Drehmomenteingangs- oder Drehmomentausgangswelle und einem Schaltelement angeordnet sein, sondern auch in den Verbindungsschnittstellen von einem Schaltelement zu einem anderen Schaltelement oder auf zweiteilig ausgeführten Zwischenwellen.

Vorteilhafterweise können die Torsionsdämpfungselemente hierbei zwischen Verzahnungselementen der Schaltelemente und der Drehmomenteingangswelle und/oder der Drehmomentausgangswelle angeordnet sein.

Durch die vorstehend genannte Ausführungsform ergibt sich der Vorteil, dass die Torsionsdämpfungselmente besonders platzsparend und direkt an empfindlichen Bereichen (aufgrund der geringen Materialstärke der Verzahnungselemente) mit verhältnismäßig hohen einwirkenden Torsionskräften untergebracht werden können. Durch das Zwischenfügen der Torsionsdämpfungselmente können vorteilhafterweise Drehmomentungleichförmigkeiten, die z. B. aufgrund der Zahneingriffe im Getriebe entstehen, reduziert werden, wodurch die messtechnische Erfassung der Drehmomentmessung verbessert werden kann.

Mit anderen Worten betrifft die Erfindung im Grundaufbau ein leistungsverzweigtes Stirnradgetriebe, das vorzugsweise ohne Hohlrad aufgebaut ist und vorwiegend im Prüfstandsbau als Hochtreibergetriebe zum Einsatz kommt. Es ist insbesondere auch als Nachrüstlösung für bereits bestehende Prüfstände gedacht, deren Drehzahlfeld nach oben erweitert werden soll. In umgekehrter Richtung wird das Getriebe benutzt, wenn ein bestehender Motor mit dem Getriebe auf niedrigere Drehzahl bei größerem Drehmoment reduziert wird. In den Grundaufbau des leistungsverzweigten Getriebes sind die nachfolgend aufgeführten Optionen integriert, um dem Anwender eine kompakte und leistungsfähige Einheit, insbesondere für Prüfstandsanwendungen, anzubieten.

Ein mit den folgenden Zusatzmerkmalen ausgestattetes Getriebe, vorzugsweise Prüfstandsgetriebe, führt zu Vorteilen, weil dadurch insgesamt der Einsatzbereich erweitert und/oder die Bedienung erleichtert wird.

Ein Schaltmechanismus ermöglicht hierbei in einer oder mehreren Schaltstellungen den Betrieb des Getriebes mit einer oder mehreren Über- /Untersetzungen und gegebenenfalls in einer weiteren anderen Schaltstellung einen Durchtrieb ohne Drehzahländerung. Dadurch lässt sich mit einem Aufbau ein größerer Betriebsbereich erreichen, d. h. es können beispielsweise mit einem Aufbau verschiedene Prüflinge untersucht werden.

Neuere Elektromotoren werden mittlerweile teilweise mit einer Rotorinnenkühlung ausgestattet, um die Leistungsdichte weiter zu erhöhen. Werden solche Motoren an Prüfständen untersucht, muss dort auch die Kühlmittelzufuhr gewährleistet werden. Das vorgestellte Getriebesystem bietet auch dafür eine Lösung, indem die Sonnenwelle hohl ausgeführt wird und über eine feststehende Leitung, eine sogenannte Lanze oder mittels einer Drehdurchführung über die Hohlwelle selbst im Zentrum, Kühlmittel oder auch ein anderes Medium in Richtung Prüfling zugeführt werden kann.

Eine besondere Bedeutung kommt der Flüssigkeitsdurchführung in Verbindung mit einer möglichen Schaltung im leistungsverzweigten Getriebe zu. Dabei wird das Medium über das Schaltelement ins Zentrum der Ausgangswelle geführt. Im nicht geschalteten Zustand ist das Schaltelement gegenüber dem Gehäuse gedichtet und das Medium wird ins Zentrum der Ausgangswelle transportiert und steht dort z. B. zur Kühlung des Prüflings zur Verfügung. In der anderen Schaltstellung, also im Durchtrieb, verbindet das Schaltelement Ein- und Ausgangswelle. Dadurch ist keine Flüssigkeitszufuhr möglich. Die Zufuhr wird dabei im Zulauf unterbrochen.

Weiterhin ist vor allem für Forschungs- und Entwicklungsaufgaben die messtechnische Erfassung der Betriebsdaten am Prüfling gefragt. Dabei wird die Drehmomentmessung durch die Drehmomentungleichförmigkeit aufgrund der Zahneingriffe im Getriebe gestört. Dem daraus resultierenden Wunsch von Anwendern nach einer Torsionsdämpfung zwischen Getriebe und Prüfling wird durch die Integration von Dämpfungselementen z. B. auf der Sonnenwelle nachgekommen.

Die Dämpfungselemente sind dabei platzsparend zwischen einem Wellen- und einem Nabenteil als Kupplung positioniert. Üblicherweise werden solche Kupplungen als separate Einheit als Verbindung von unterschiedlichen Baugruppen verwendet (z. B. zwischen Motor und Getriebe). Dafür sind jeweils Schnittstellen (Passungsdurchmesser zur Klemmung, Lochkreis zur Verschraubung o. ä.) vorgesehen.

Die Verbindung über diese Schnittstellen benötigt jedoch eigenen Bauraum und bringt zusätzliche Masse in den Aufbau. Gerade für hochdrehende Anwendung kann das sehr nachteilig sein. Daher werden Dämpfungselemente direkt zwischen Welle und Nabenteil, z. B. einem Verzahnungselement, eingebracht.

### Kurzbeschreibung der Figuren

Die Erfindung wird nachfolgend mit Hilfe von Zeichnungen näher erläutert. Es zeigen:
Fig. 1 einen schematischen Grundaufbau einer ersten Ausführungsform eines Prüfstandsgetriebes,
Fig. 2 einen schematischen Grundaufbau einer zweiten Ausführungsform eines Prüfstandsgetriebes,
Fig. 3 eine perspektivische Darstellung der zweiten Ausführungsform des Prüfstandsgetriebes,
Fig. 4 eine Schnittdarstellung des Prüfstandsgetriebes entlang der Längsachsen der Drehmomenteingangswelle und der Drehmomentausgangswelle zur Veranschaulichung einer ersten Ausführungsform der Flüssigkeitszuführung,
Fig. 5 eine Schnittdarstellung des Prüfstandsgetriebes entlang der Längsachsen der Drehmomenteingangswelle und der Drehmomentausgangswelle zur Veranschaulichung einer zweiten Ausführungsform der Flüssigkeitszuführung,
Fig. 6 eine Explosions-Darstellung eines Schaltelements und der Drehmomentausgangswelle sowie der zwischengefügten Torsionsdämpfungselemente,
Fig. 7 eine perspektivische Darstellung der mit einem Schaltelement zusammengebauten Drehmomentausgangswelle sowie die in die Verbindungsabschnitte zwischengefügten Torsionsdämpfungselementen.

Die Figuren sind lediglich schematischer Natur und dienen nur dem Verständnis der Erfindung. Die gleichen Elemente sind mit denselben Bezugszeichen versehen. Die Merkmale der einzelnen Ausführungsbeispiele können untereinander ausgetauscht werden.

### Beschreibung der Ausführungsbeispiele

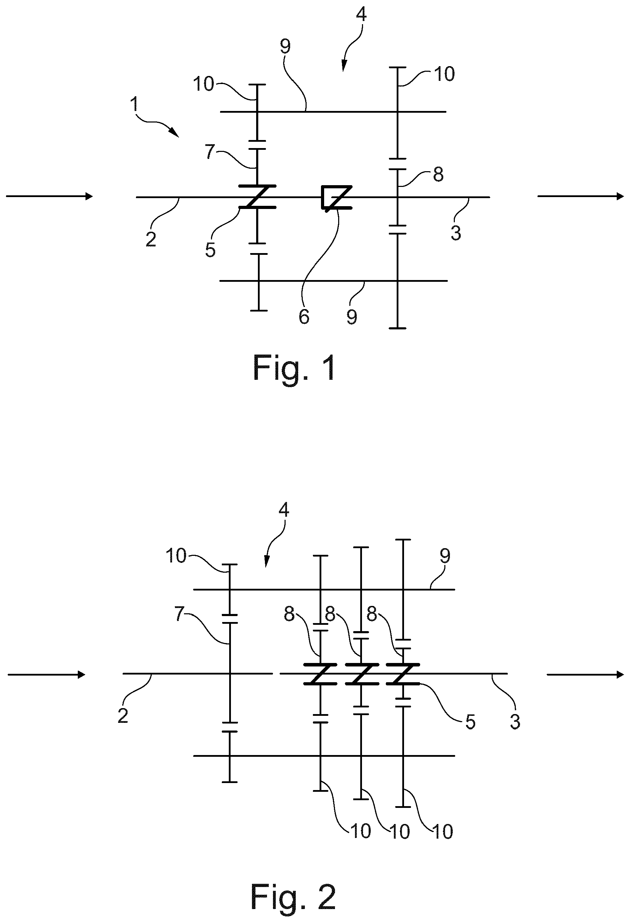

In Figur 1 ist eine erfindungsgemäße erste Ausführungsform des Prüfstandsgetriebe 1 eines Prüfstandes gezeigt. Das Prüfstandsgetriebe 1 hat eine Drehmomenteingangswelle 2 und eine Drehmomentausgangswelle 3, wobei die Drehmomentausgangswelle 3 vorbereitet ist, um an einen Prüfling, wie einen hochdrehenden Elektromotor zu koppeln. Zwischen der Drehmomenteingangswelle 2 und der Drehmomentausgangswelle 3 ist ein leistungsverzweigter Getriebeabschnitt 4 vorhanden, der es ermöglicht auf unterschiedlichen, zueinander separaten Kraftflusswegen Drehmoment von der Drehmomenteingangswelle 2 zur Drehmomentausgangswelle 3 zu verbringen. Weiterhin ist zwischen dem leistungsverzweigten Getriebeabschnitt 4 und der Drehmomenteingangswelle 2 ein Schaltelement als Durchschaltelement 5 angeordnet und ein zweites Schaltelement als Kupplungselement 6 zwischen der Drehmomenteingangswelle 2 und Drehmomentausgangswelle 3 angeordnet.

Die erste Ausführungsform des Prüfstandsgetriebes 1 ist dabei so eingerichtet, dass für eine Über- oder Untersetzung von der Drehmomenteingangswelle 2 auf die Drehmomentausgangswelle 3 das Durchschaltelement 5 aktiviert und gleichzeitig das Kopplungselement 6 deaktiviert wird. D.h. das Drehmoment der Drehmomenteingangswelle 2 wird über eine am Durchschaltelement 5 angeordnete Drehmomenteingangs-Verzahnung 7 auf das leistungsverzweigte Getriebe 4 übertragen, da im aktivierten Zustand des Durchaltelements 5 die Drehmomenteingangs-Verzahnung 7 an der Drehmomenteingangswelle 2 fixiert ist und sich die Drehmomenteingangs-Verzahnung 7 somit mit der Drehzahl der Drehmomenteingangswelle 2 dreht.

Gleichzeitig ist in dieser Schaltkonfiguration das Kopplungselement 6, das zum Beispiel eine Klauenkupplung, ein Kupplungsmuffe oder eine andere beliebige Kupplungsart sein kann, deaktiviert, d.h. das Kopplungselement 6 zwischen den sich gegenüberliegenden Wellenenden der Drehmomenteingangswelle 2 und der Drehmomentausgangswelle 3 ist entkoppelt und überträgt kein Drehmoment zwischen Drehmomenteingangswelle 2 und Drehmomentausgangswelle 3.

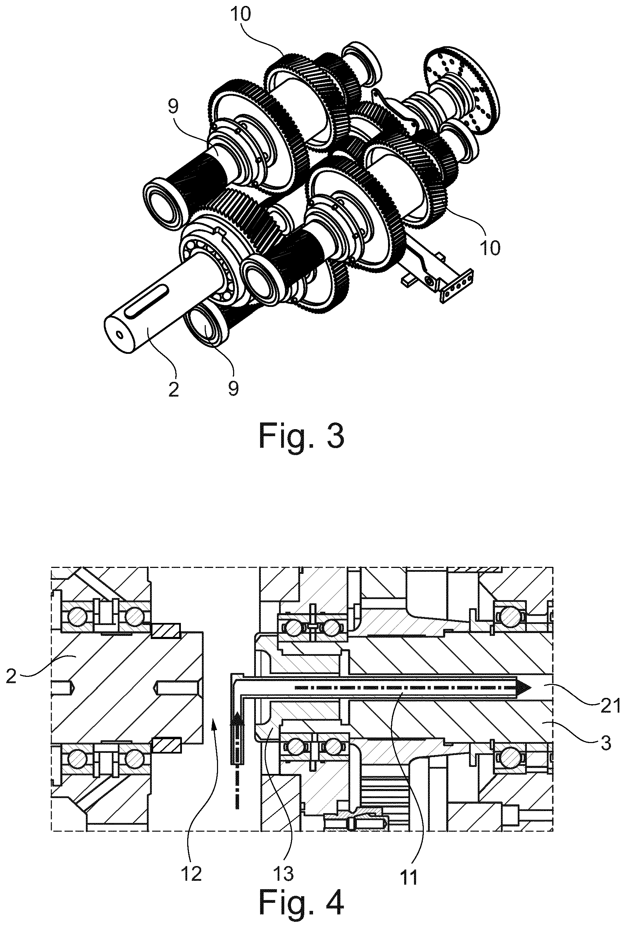

Das von der Drehmomenteingangswelle 2 auf die Drehmomenteingangs-Verzahnung 7 übertragene Drehmoment wird weiter über das leistungsverzweigte Getriebe 4 auf eine an der Drehmomentausgangwelle 3 angeordnete Drehmomentausgangs-Verzahnung 8 übertragen und somit auf die Drehmomentausgangswelle 3 weitergegeben. Das leistungsverzweigte Getriebe 4 wird hierbei, wie in Fig. 3 gezeigt, durch drei Zwischenwellen 9 realisiert, die planetenartig um die Drehmomenteingangswelle 2 und Drehmomentausgangswelle 3 angeordnet sind. Es sei erwähnt, dass weder gleiche Abstände noch eine Parallelität erforderlich ist, jedoch Vorteile aufweist. Je nach Über- oder Untersetzungseinstellungen des Prüfstandsgetriebes 1 sind auf den Zwischenwellen 9 verschiedene Zwischenwellen-Verzahnungen 10 mit unterschiedlichen Durchmessern und Zähnezahlen angeordnet.

Die vorstehende Schaltkonfiguration des ersten Ausführungsbeispiels des Prüfstandsgetriebes 1 kann aber auch umgekehrt werden, d.h. das Durchschaltelement 5 wird deaktiviert und das Kopplungselement 6 wird aktiviert. In diesem Zustand wird das Drehmoment der Drehmomenteingangswelle 2 nicht auf die Drehmomenteingangs-Verzahnung 7 übertragen und geht somit nicht den Weg über das leistungsverzweigte Getriebe 4, sondern wird direkt und ohne Über- oder Untersetzung über das Kopplungselement 6 auf die Drehmomentausgangswelle 3 übertragen.

In Figur 2 ist ein zweites Ausführungsbeispiel des Prüfstandsgetriebes 1 gezeigt, das drei unterschiedliche Über- oder Untersetzungen ermöglicht, aber ohne Durchschaltung ausgeführt ist. In dieser Ausführungsform des Prüfstandsgetriebes 1 befindet sich keinerlei Schaltelement an der Drehmomenteingangswelle 2, so dass die Drehmomenteingangs-Verzahnung 7 das Drehmoment alternativlos auf das leistungsverzweigte Getriebe 4 überträgt. Auf den Zwischenwellen 9 des leistungsverzweigten Getriebes 4 befinden sich jeweils drei der vier Zwischenwellen-Verzahnungen 10 im Eingriff mit Drehmomentausgangs-Verzahnungen 8 der Drehmomentausgangswelle 3. Zwischen den Drehmomentausgangs- Verzahnungen 8 und der Drehmomentausgangswelle 3 sind jeweils Durchschaltelemente 5 angeordnet.

Je nach gewünschter Übersetzung kann eines der drei vorhandenen Durchschaltelemente aktiviert werden, während die anderen beiden Durchschaltelemente 5 inaktiv sind, so dass deren Drehmomentausgangs-Verzahnungen 8 kein Drehmoment auf die Drehmomentausgangswelle 3 übertragen. In anderen Worten ausgedrückt, kann auf der Drehmomentausgangswelle 3 selektiv immer genau ein Durchschaltelement 5 mit einer dazugehörigen Drehmomentausgangs- Verzahnung 8 aktiviert werden, so dass insgesamt drei verschiedene Übersetzungen realisiert werden können.

Wie bereits zuvor erwähnt, zeigt Fig. 3 ein Prüfstandsgetriebe 1 mit einem leistungsverzweigten Getriebe 4, das drei Zwischenwellen 9 aufweist. Bei dem in Fig. 3 gezeigten Prüfstandsgetriebe 1 handelt es sich um die zweite Ausführungsform.

In Fig. 4 ist eine erste Ausführungsform einer in das Prüfstandsgetriebe 1 integrierten Flüssigkeitszuführung gezeigt. Hierbei ist die Drehmomentausgangswelle 3 als Hohlwelle 3 ausgeführt und eine feststehende Leitung/ Lanze 11 entlang der Mittelachse der Drehmomentausgangswelle 3 in die Drehmomentausgangswelle 3 eingeführt. Die feststehende Leitung 11 dreht sich im Betrieb des Prüfstandsgetriebes 1, selbst nicht. Somit drehen sich lediglich, die Drehmomentausgangswelle 3 bzw. Hohlwelle 3 sowie die Hohlwellenschlusshülse 13, die die feststehende Leitung 11 teilweise umgeben.

Mit der vorstehenden Ausführung ist es möglich platzsparend und mit konstruktiv verhältnismäßig geringem Aufwand einen Prüfling des Prüfstandsgetriebes 1 über die Drehmomentausgangswelle 3 effizient mit Flüssigkeit zu versorgen.

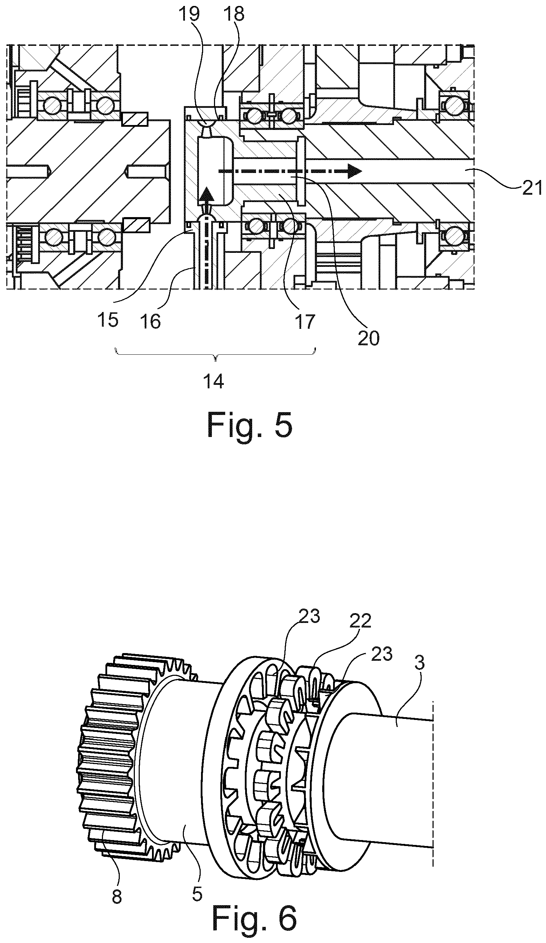

Eine zweite Ausführungsform einer in das Prüfstandsgetriebe 1 integrierten Flüssigkeitszuführung ist in Fig. 5 gezeigt. Hierbei wird über eine Drehdurchführung 14, die eine statische Wellenhülse 15 mit Stator-Leitung 16 und ein in der Wellenhülse 15 sich drehendes Rotorteil 17 der Drehdurchführung 14 (auch als Flüssigkeitsrotor bezeichenbar) aufweist, die Drehmomentausgangswelle 3 mit Flüssigkeit versorgt.

Der Kühlmittelstrom fließt hierbei über die Stator-Leitung 16 in ein Statorteil 18 der Drehdurchführung 14, von wo aus das Kühlmittel über Kühlmitteleinlassöffnungen 19, die sich an der von der Wellenhülse 15 umgebenen Außenseite des Rotorteil der Drehdurchführung 17 befinden, in den Rotorteil 17 einfließt. Der Rotorteil der Drehdurchführung 17 wiederum ist drehfest mit der Drehmomentausgangswelle 3, die als Hohlwelle 3 ausgeführt ist, verbunden und dreht sich mit dieser mit.

Die über die Kühlmitteleinlassöffnungen 19 in den Rotorteil der Derhdurchführung17 eingeleitete Flüssigkeit wird über eine zur Drehmomentausgangswelle 3 hin geöffnete Längsbohrung 20 des Rotorteils der Drehdurchführung 17 in eine in Längsrichtung der Drehmomentausgangswelle 3 anschließende Hohlwellen-Längsbohrung 21 eingeleitet, von wo aus die Flüssigkeit weiter an den Prüfling geleitet und dessen Versorgung mit dem Medium sichergestellt wird.

Man kann sich vorstellen, dass die Kühlmittelzufuhr in das Kopplungselement 6 integriert ist. Das Kühlmittel wird hierbei über einen verschließbaren Kühlmittel-Zuflusskanal in einen Anschlusskanal des Kopplungselements 6 geleitet. Von dort aus fließt das Kühlmittel weiter in eine Lanze für Flüssigkeitszufuhr / Kühllanze, die senkrecht und mittig zentriert zur Längsachse des Kopplungselements 6 aus dieser hervortritt und über die Hohlwellenschlusshülse 13 in die Drehmomenteingangswelle 3 ragt, so dass die Flüssigkeit / das Kühlmittel über die Drehmomenteingangswelle 3 zum Prüfling transportiert wird.

Eine besondere Ausführungsform der Flüssigkeitszufuhr / Kühlmittelzufuhr könnte dabei so eingerichtet sein, dass die Kühlung des Prüflings nur solange erfolgt, solange das Kopplungselement 6 entkoppelt ist und somit keine direkte Drehmomentweitergabe zwischen Drehmomenteingangswelle 2 und Drehmomentausgangswelle 3 stattfindet, sondern anstatt dessen die Drehmomentweitergabe von der Drehmomenteingangswelle 2 über das leistungsverzweigte Getriebe 4 auf die Drehmomentausgangswelle 3 stattfindet und aufgrund der daraus resultierenden Übersetzung eine deutlich erhöhte Drehzahlzunahme an der Drehmomentausgangswelle 3 erreicht wird, die eine zusätzliche Flüssigkeitszufuhr / Kühlung erfordert.

Damit das Kopplungselement 6 mit integrierter Flüssigkeitszufuhr / Kühlmittelzufuhr, mit der Drehmomentausgangswelle 3 gekoppelt werden kann, wird das Kopplungselement 6 axial in Richtung Drehmomentausgangswelle 3 über einen (nicht dargestellten) Stellmechanismus verschoben und über einen Außenumfangsabschnitt der Hohlwellenschlusshülse 13 aufgeschoben. In dieser Schaltstellung des Kopplungselements 6 greift eine erste Innenverzahnung eines ersten Innenradius des Kopplungselements 6, dessen Mittelachse koaxial zu den Längsachsen der Drehmomenteingangswelle 2 und Drehmomentausgangswelle 3 ist, in eine Außenverzahnung des zur Drehmomentausgangswelle 3 gewandten Endstücks der Drehmomenteingangswelle 2.

Gleichzeitig greift in dieser Schaltstellung eine zweite Innenverzahnung eines zweiten Innenradius auf der gegenüberliegenden Seite des Kopplungselements 6 in eine Verzahnung des Außenumfangsabschnitts der Hohlwellenschlusshülse 13, so dass das Kopplungselement 6 sowohl mit der Drehmomenteingangswelle 2 als auch der Drehmomentausgangswelle 3 gekoppelt ist und eine direkte Drehmomentübertragung zwischen beiden Wellen ohne Über- oder Untersetzung stattfindet.

Aufgrund der zuvor beschriebenen axialen Verschiebung des Kopplungselements 6 für die gekoppelte Schaltstellung verschiebt sich ebenfalls der am Außenumfang des Kopplungselements 6 befindliche Zugang des Anschlusskanals des Kopplungselements 6, so dass die Kühlmittelzufuhr zwischen Zuflusskanal und Anschlusskanal gezielt unterbrochen wird. Diese Kühlmittelzufuhrunterbrechung ist zweckmäßig, da die im Durchtrieb-Betrieb auftretenden verhältnismäßig niedrigeren Drehzahlen keine zusätzliche Kühlung erforderlich machen.

Weiterhin sind in Fig. 6 klammerförmige Torsionsdämpfungselemente 22 gezeigt, die zwischen die Verzahnungselemente 23 der Drehmomentausgangsverzahnung 5 und der Drehmomentausgangswelle 3 angeordnet sind, um Drehmomentungleichförmigkeiten aufgrund von Zahneingriffen im Prüfstandsgetriebe 1, die die messtechnische Erfassung der Betriebsdaten am Prüfling stören könnten, zu reduzieren.

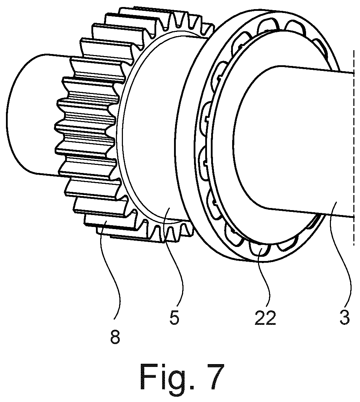

Abschließend zeigt Fig. 7 den zusammengefügten Zustand der integrierten Torsionsdämpfungselemente 22 zwischen der Drehmomentausgangsverzahnung 8 und der Drehmomentausgangswelle 3.

### Bezugszeichenliste

- 1: Prüfstandsgetriebe
- 2: Drehmomenteingangswelle
- 3: Drehmomentausgangswelle bzw. Hohlwelle
- 4: leistungsverzweigter Getriebeabschnitt
- 5: Durchschaltelement
- 6: Kopplungselement
- 7: Drehmomenteingangs-Verzahnung
- 8: Drehmomentausgangs-Verzahnung
- 9: Zwischenwellen
- 10: Zwischenwellen-Verzahnung
- 11: feststehende Leitung
- 12: Zwischenraum
- 13: Hohlwellenschlusshülse
- 14: Drehdurchführung
- 15: statische Wellenhülse
- 16: Stator-Leitung
- 17: Rotorteil der Drehdurchführung
- 18: Statorteil
- 19: Kühlmitteleinlassöffnungen
- 20: Längsbohrung des Rotorteils
- 21: Hohlwellen-Längsbohrung
- 22: Torsionsdämpfungselemente
- 23: Verzahnungselemente für Aufnahme von Dämpfungselementen

## Patentansprüche

1. Prüfstand mit einem Prüfstandsgetriebe (1), vorzugsweise als Zahnradgetriebe ausgebildet, aufweisend eine Drehmomenteingangswelle (2) und eine Drehmomentausgangswelle (3), wobei
die Drehmomentausgangswelle (3) vorbereitet ist, um an einen Prüfling, wie einen hochdrehenden Elektromotor zu koppeln, und
wobei zwischen der Drehmomenteingangswelle (2) und der Drehmomentausgangswelle (3) ein leistungsverzweigter Getriebeabschnitt (4) vorhanden ist, der es ermöglicht auf unterschiedlichen, zueinander separaten Kraftflusswegen Drehmoment von der Drehmomenteingangswelle (2) zur Drehmomentausgangswelle (3) zu verbringen, wobei zwischen dem leistungsverzweigten Getriebeabschnitt (4) und der Drehmomenteingangswelle (2) und der Drehmomentausgangswelle (3) mindestens ein Schaltelement vorhanden ist,
**dadurch gekennzeichnet, dass**
zumindest ein Schaltelement ein Kopplungselement (6) ist, das dazu eingerichtet ist die Drehmomenteingangswelle (2) und Drehmomentausgangswelle (3) an den jeweils sich gegenüberliegenden Wellenenden in axialer Richtung direkt zu koppeln und das eingerichtet ist, je nach Schaltstellung eine Drehmomentweitergabe zu ermöglichen oder zu verunmöglichen.

2. Prüfstand mit einem Prüfstandsgetriebe (1) nach Anspruch 1, **dadurch gekennzeichnet, dass** die Drehmomenteingangswelle (2) und/oder die Drehmomentausgangswelle (3) mindestens ein Schaltelement aufweisen, das ein Durchschaltelement (5) ist, das zwischen der Drehmomenteingangswelle (2) und einem daran befindlichen Drehmomenteingangs-Ritzel (7) oder zwischen der Drehmomentausgangswelle (3) und einer daran befindlichen Drehmomentausgangs-Verzahnung (8) angeordnet ist und dazu eingerichtet ist, eine Drehmomentweitergabe zu ermöglichen oder zu verunmöglichen.

3. Prüfstand mit einem Prüfstandsgetriebe nach Anspruch 2, **dadurch gekennzeichnet, dass** das Durchschaltelement (5) und zumindest ein Bestandteil des Kopplungselements (6) auf der Drehmomenteingangswelle (2) angeordnet sind.

4. Prüfstand mit einem Prüfstandsgetriebe nach Anspruch 2, **dadurch gekennzeichnet, dass** als Schaltelemente lediglich Durchschaltelemente (5) an der Drehmomentausgangswelle (3) angeordnet sind.

## Claims

1. A test rig with a test rig gearbox (1), preferably designed as a gear transmission, comprising a torque input shaft (2) and a torque output shaft (3), wherein
the torque output shaft (3) is adapted to be coupled to a test specimen, such as a highspeed electric motor, and
wherein a power-split gearbox section (4) is provided between the torque input shaft (2) and the torque output shaft (3), which enables torque to be transmitted from the torque input shaft (2) to the torque output shaft (3) via different, mutually separate power transmission paths, wherein
at least one shifting element is provided between the power-split gearbox section (4) and the torque input shaft (2) and the torque output shaft (3),
**characterised in that**
at least one shifting element is a coupling element (6) which is arranged to directly couple the torque input shaft (2) and the torque output shaft (3) in the axial direction at their respective opposing shaft ends, and which is arranged to either enable or prevent torque transmission depending on the shift position.

2. The test rig comprising the test rig gearbox (1) according to claim 1, **characterised in that** the torque input shaft (2) and/or the torque output shaft (3) comprise at least one shifting element, which is a through-shift element (5) arranged between the torque input shaft (2) and a torque input pinion located thereon (7) or between the torque output shaft (3) and a torque output gear (8) located thereon, and is configured to enable or prevent the torque transmission.

3. The test rig comprising the test rig gearbox (1) according to claim 2, **characterised in that** the through-shift element (5) and at least one component of the coupling element (6) are arranged on the torque input shaft (2).

4. The test rig comprising the test rig gearbox (1) according to claim 2, **characterised in that** only through-shift elements (5) are arranged on the torque output shaft (3) as shifting elements.

## Revendications

1. Banc d'essai avec un réducteur de banc d'essai (1), de préférence en tant que réducteur à engrenages, présentant un arbre d'entrée de couple (2) et un arbre de sortie de couple (3), dans lequel
l'arbre de sortie de couple (3) est préparé pour être couplé à un échantillon d'essai, tel qu'un moteur électrique à haute vitesse de rotation, et
dans lequel, entre l'arbre d'entrée de couple (2) et l'arbre de sortie de couple (3), une section de transmission à dérivation de puissance (4) est présente, qui permet de transmettre un couple de l'arbre d'entrée de couple de rotation (2) à l'arbre de sortie de couple (3) par des voies de transmission de puissance séparées les unes des autres, dans lequel au moins un élément de commutation est présent entre la section de transmission à dérivation de puissance (4) et l'arbre d'entrée de couple (2) et l'arbre de sortie de couple (3),
**caractérisé en ce que**
au moins un élément de commutation est un élément de couplage (6) qui est configuré pour coupler directement en direction axiale l'arbre d'entrée de couple (2) et l'arbre de sortie de couple (3) aux extrémités opposées respectives et configuré pour permettre ou pour empêcher une transmission de couple en fonction de la position de commutation.

2. Banc d'essai avec un réducteur de banc d'essai (1) selon la revendication 1, **caractérisé en ce que** l'arbre d'entrée de couple (2) et/ou l'arbre de sortie de couple (3) présentent au moins un élément de commutation qui est un élément de passage (5), qui est disposé entre l'arbre d'entrée de couple (2) et un pignon d'entrée de couple (7) qui s'y trouve ou entre l'arbre de sortie de couple (3) et une denture de sortie de couple (8) qui s'y trouve et est configuré pour permettre ou pour empêcher une transmission de couple.

3. Banc d'essai avec un réducteur de banc d'essai selon la revendication 2, **caractérisé en ce que** l'élément de passage (5) et au moins une partie constituante de l'élément de couplage (6) sont disposés sur l'arbre d'entrée de couple (2).

4. Banc d'essai avec un réducteur de banc d'essai selon la revendication 2, **caractérisé en ce que** seuls des éléments de commutation (5) sont disposés sur l'arbre de sortie de couple (3) en tant qu'éléments de commutation.
